(19) Europäisches Patentamt

European Patent Office

Office européen des brevets

(11) EP 0 492 251 B1

(12) EUROPÄISCHE PATENTSCHRIFT

(45) Veröffentlichungstag und Bekanntmachung des Hinweises auf die Patenterteilung:
30.10.1996 Patentblatt 1996/44

(51) Int Cl.⁶: H04Q 3/545, G06F 15/16, G06F 9/46, H04L 12/00

(21) Anmeldenummer: 91121082.1

(22) Anmeldetag: 09.12.1991

(54) **Kommunikationssystem mit Anschlussbaugruppen, einem der Durchschaltung von Verbindungen dienenden Koppelfeld, einem zentralen Zeichenkanal sowie einem der zentralen Steuerung dienenden Multiprozessorsystem**

Communication system with interface circuits, a switching network, a central character channel and a multiprocessor system for central control

Système de communication avec circuits d'interfaçage, un réseau de commutation, un canal central de charactère et un système multiprocesseur pour la commande centrale

(84) Benannte Vertragsstaaten:
AT BE CH DE ES FR GB GR IT LI LU NL SE

(30) Priorität: 20.12.1990 DE 4041031

(43) Veröffentlichungstag der Anmeldung:
01.07.1992 Patentblatt 1992/27

(73) Patentinhaber: SIEMENS AKTIENGESELLSCHAFT
80333 München (DE)

(72) Erfinder: Schwagmann, Josef, Dipl.-Phys.
W-8060 Dachau (DE)

(56) Entgegenhaltungen:
EP-A- 0 215 992          EP-A- 0 236 803
US-A- 4 905 200

• IBM TECHNICAL DISCLOSURE BULLETIN Bd. 27, Nr. 7B, Dezember 1984, NEW YORK US Seiten 4443 - 4445 D. A. ROOP 'Microcode patch method for a multiplicity of processors'

**Beschreibung**

Die Erfindung betrifft ein Verfahren zum Einbringen von Fellerkorrekturen in einem Kommunikationssystem.

Komplexe Kommunikationssysteme sind meist als Multiprozessor-systeme realisiert. Diese besitzen gegenüber Monoprozessor-systemen Vorteile, wie zum Beispiel eine drastischen Erhöhung der Verarbeitungsgeschwindigkeit. Dies wird durch eine parallele Bearbeitung mehrerer Aufgaben erreicht, die jeweils Teilaufgaben einer zu bearbeitenden Aufgabe darstellen; jeder Prozessor bearbeitet eine Teilaufgabe und die Teilergebnisse werden zu einem Gesamtergebnis zusammengesetzt. Neben der hohen Verarbeitungsgeschwindigkeit besteht ein weiterer Anspruch, der an moderne Kommunikationssysteme gestellt wird, darin die jederzeitige Verfügbarkeit des Systems für alle Teilnehmer sicherzustellen, was durch eine weitgehende Doppelung zentraler Teile des Systems erreicht wird. So stellen internationale Normierungsgremien für Kommunikationssysteme/Kommunikationsnetze - beispielsweise CCITT - die Forderung nach einer hohen Verfügbarkeit des Systems über die gesamte Lebensdauer, z.B. in der Form, daß eine Kommunikationsanlage auf die Dauer von 20 Jahren höchstens zwei Stunden ausfallen darf. Um diesen Ansprüchen gerecht zu werden, müssen die systeminternen Abläufe von einer Vielzahl von Prozessen und Prozeduren gesteuert und überwacht werden. Damit erhöht sich aber die Komplexität der in einem Kommunikationssystem ablaufenden Prozeduren und Prozesse drastisch. Allgemein gilt, daß je komplexer und vielschichtiger ein System ist, um so höher die Fehlerwahrscheinlichkeit wird. Daher müssen die während des Betriebes auftretenden Fehler analysiert und anschließend Korrekturdaten unmittelbar in das System eingebracht werden, um damit die Fehlerwahrscheinlichkeit des Systems zu vermindern und somit die Verfügbarkeit des Systems zu erhöhen. Generell sind Fehler bei der Erstellung von Prozeduren unvermeidbar. Zwar können Syntaxfehler im Zuge der Erstellung durch spezielle Prozeduren, wie z. B. Compilerprozeduren, eliminiert werden, jedoch können logische Codierungsfehler über eine solche Syntaxprüfung nicht ermittelt werden; sie wirken sich somit während des laufenden Betriebes aus und treten insbesondere dort auf, wo ein komplexes Zusammenspiel von Prozeduren und Prozessen stattfindet. Die Komplexität eines derartiges Systems macht aber das Auftreten eines logischen Codierungsfehlers erst nach längerer Betriebszeit möglich und erschwert ein unmittelbares Beheben eines solchen Fehlers.

Zwar gestatten es Monoprozessorsysteme herkömmlicher Art, bei geringem Zeit- und Arbeitsaufwand korrigierte und damit neu codierte Prozedurabläufe nochmals zu editieren, zu compilieren, zu binden sowie erneut in das System einzubringen; jedoch ist bei den heute verwendeten, auf Multiprozessorbasis basierenden Kommunikationssystemen ein derartiges Vorgehen praktisch nicht mehr möglich, da das Einbringen auch kleinster Korrekturen ein erneutes Editieren, Kompilieren sowie Binden aller Prozeduren des gesamten Kommunikationssystems bedeuten würde. Ein solcher Prozeß würde im allgemeinen aber mehrere Tage in Anspruch nehmen, und somit Rechenzentren lange Zeit für weitere Aufgaben blockieren.

Die Notwendigkeit, Verfahren zu entwickeln, die ein schnelles, kurzfristiges Einbringen kleinerer Fehlerkorrekturen in die Software eines Kommunikationssystems gestatten, führte zur Entwicklung von Prozeduren zur Schnellkorrektur von logischen Codierungsfehlern, im folgenden Patches genannt. Mit Patches lassen sich kleine Software-Korrekturen kurzfristig ausführen. Die Änderungen werden durch Anweisungen über ein Bedienterminal unmittelbar den zu korrigierenden Codeabläufen in den jeweiligen Prozeduren zugeführt. Bei einfacheren logischen Codierungsfehlern wird dabei der fehlerhafte Code überschrieben. Falls jedoch darüberhinaus im Programmablauf zusätzlicher Code eingefügt werden muß, wird der eingebrachte Patch mit einem sogenannten 'Rucksack' verbunden. Dieser enthält jenen zusätzlichen Programmcode, der zur Behebung des logischen Fehlers notwendig ist, und wird in einem speziell zu diesem Zweck vorgesehenen Speicherbereich abgelegt. Die Korrektur des nun geänderten Programmcodes macht sich beim späteren Ablauf dahingehend bemerkbar, daß die Prozedur an der entsprechenden Änderungsstelle zu dem eingebrachten 'Rucksack' verzweigt, und nach Abarbeitung desselben ein Rücksprung zum ursprünglichen Programmcode erfolgt. Gesteuert wird dieser Vorgang über eine sogenannte Patch-Verwaltung. In dieser sind in Tabellenform die Adressen der den Patches zugeordneten 'Rucksäcke' abgelegt.

Die Erstellung der Prozeduren eines Kommunikationssystems impliziert mehrere, komplexe Entwicklungsschritte, da zum einen die Prozedur unmittelbar nach dem Codierungsprozeß noch mit Fehlern behaftet ist, die erst nach weiteren Entwicklungsschritten beseitigt werden und zum anderen weitere Leistungsmerkmale hinzugefügt werden, was in der Regel ein Einbinden weiterer Prozeduren in die Software des Kommunikationssystems bedeutet.

Aus organisatorischen Gründen wird jedem Entwicklungsschritt eine Versionsnummer zugeteilt. Über einen Patch werden aber nur vorübergehende keine neuen Versionen begründende Fehlerkorrekturen in das System eingebracht. Werden nun im Zuge der Verwendung neuer Leistungsmerkmale neue Prozedurkomponenten erstellt und in das System eingebunden, denen dann entsprechend neue Versionsnummern zugeteilt werden, so wird diese Gelegenheit benutzt, um die - vorübergehend - eingeführten Patches vollständig in die Prozeduren einzuarbeiten. In den, mit einer neuen Versionsnummer versehenen Prozeduren werden die "ehemaligen" Patches also nicht mehr mitgeführt.

Mit diesem Verfahren zur schnellen Fehlerkorrektur (Patch-Verfahren) lassen sich kurzfristig einfachere logische Codierungsfehler korrigieren und in die Prozeduren des Kommunikationssystems einbringen. Unter einfacheren logischen Codierungsfehlern sind z. B. solche Fehler zu verstehen, die in einem von einem einzigen Prozessor zu bearbeitenden Modul auftreten. Durch die Entwicklung zu Multiprozessorsystemen gibt es aber Konstellationen, die in einer Monoprozessor-Architektur nicht auftreten. Logische Codierungsfehler sind dabei durch das Zusammenspiel mehrerer Prozeduren und Prozesse derart komplex und vielschichtig, daß ein unmittelbares Korrigieren von fehlerhaftem Code in den jeweiligen Prozeduren nicht mehr ohne weiteres möglich ist. So sind hier neben denen aus der bisherigen "Monoprozessorwelt" bekannten Fehlern solche Fehlerarten hinzugekommen, die

- modulübergreifend auftreten,
- prozessorübergreifend auftreten,
- nur dann auftreten, wenn eine bestimmte Netzumgebung vorhanden ist, oder
- nur in Verbindung mit einer entsprechenden Firmware auftreten.

Derartige komplexe logische Codierungsfehler können aber mit dem beschriebenen Patch-Verfahren nicht mehr korrigiert und in das System eingebracht werden, da hier die Fehlerkorrekturen - z. B. im Falle modulübergreifender logischer Codierungsfehler - in einem Änderungsschritt eingebracht werden müssen.

Wie bereits erwähnt, ist die Komplexität eines Systems unmittelbar mit seiner Fehlerwahrscheinlichkeit - und damit einhergehend - seiner Verfügbarkeit korreliert. Dies bedeutet in der Praxis, daß je Komplexer das System ist, sich um so mehr Patches - also schnelle Fehlerkorrekturen - in seinen Modulen, Prozeduren und Tabellen befinden. Auf diese Patches greifen aber im weiteren Verlauf des Entwicklungsprozesses der Prozeduren eines Kommunikationssystems - in diesem Fall also bis zur Erteilung der nächsten Versionsnummer - weitere Prozeduren zu.

Den Patches sind im Arbeitsspeicher feste physikalische Adressen zugeordnet. Sollen nun im Laufe eines Entwicklungsprozesses zusätzliche Daten in die Tabellen des Kommunikationssystems eingefügt werden - insbesondere, wenn zusätzliche Teilnehmer an das Kommunikationssystem angeschlossen werden - so ist dies an sich mit einer Verschiebung dieser physikalischen Adressen verbunden. Dies wird jedoch dadurch vermieden, daß in einer Abfolge mühsamer Einzelschritte die in Frage kommenden Patches analysiert und - vorübergehend - entfernt werden, um die entsprechenden Daten einzubringen. Insbesondere das Entfernen bereits eingebrachter Patches bereitet in der Praxis aber enorme Probleme, da ehemals bereinigte Fehler nun unter Umständen wieder zum Vorschein treten können. Da - wie erwähnt - auf bereits eingebrachte Patches im weiteren Verlauf des Entwicklungsprozesses des Kommunikationssystems weitere Prozeduren zugreifen, besteht eine nicht zu vernachlässigende Wahrscheinlichkeit eines Totalabsturzes bzw. einer drastischen Eingrenzung der Verfügbarkeit des gesamten Kommunikationssystems.

Aus der Druckschrift "IBM TDB-Artikel, D.A. Roop" ist ein Patch-Verfahren in einem Multiprozessorsystem offenbart. Darin wird allerdings nicht angesprochen, wie die entsprechenden Patch-Prozeduren und Prozesse in einem Kommunikationssystem durchgeführt werden sollen.

Weiterhin ist in der europäischen Patentanmeldung EP-A-0 466 948 ein modularstrukturiertes Kommunikationssystem offenbart. Allerdings wird auch hier nicht angesprochen, wie die entsprechenden Patch-Prozeduren und Prozesse in einem Kommunikationssystem durchgeführt werden sollen.

Der Erfindung liegt die Aufgabe zugrunde, ein Patch-Verfahren anzugeben, das ein Einfügen von Korrekturen komplexer logischer Codierungsfehler in die Prozeduren des eingangs definierten Kommunikationssystems mit einer ausreichenden Praktikablität gestattet.

Diese Aufgabe wird erfindungsgemäß durch die im Kennzeichen des Patentanspruchs 1 genannten Merkmale gelöst.

Wesentlich für die Erfindung ist das Einbringen von Code-Änderungen in die Prozeduren des Kommunikationssystems während dessen laufenden Betriebes ohne besondere Einschränkung der vermittlungstechnischen Funktionen. Dies wird u.a. durch eine unterschiedliche Priorisierung der für den Einfügevorgang verantwortlichen Patch-Prozesse erreicht. Damit ist sichergestellt, daß der Einfügevorgang weder gerade ablaufende Prozesse z.B. der vermittlungstechnik unterbricht noch selbst unterbrochen wird. Dies ermöglicht, auf im gesamten Kommunikationssystem während des laufenden Betriebes auftretende komplexe logische Codierungsfehler in relativ kurzer Zeit zu reagieren. Die mit der Komplexität der Prozeduren einhergehende eingangs erwähnte Erhöhung der Fehlerwahrscheinlichkeit wird dadurch kompensiert.

Im folgenden wird die Erfindung anhand eines figürlich dargestellten Ausführungsbeispiels erläutert.

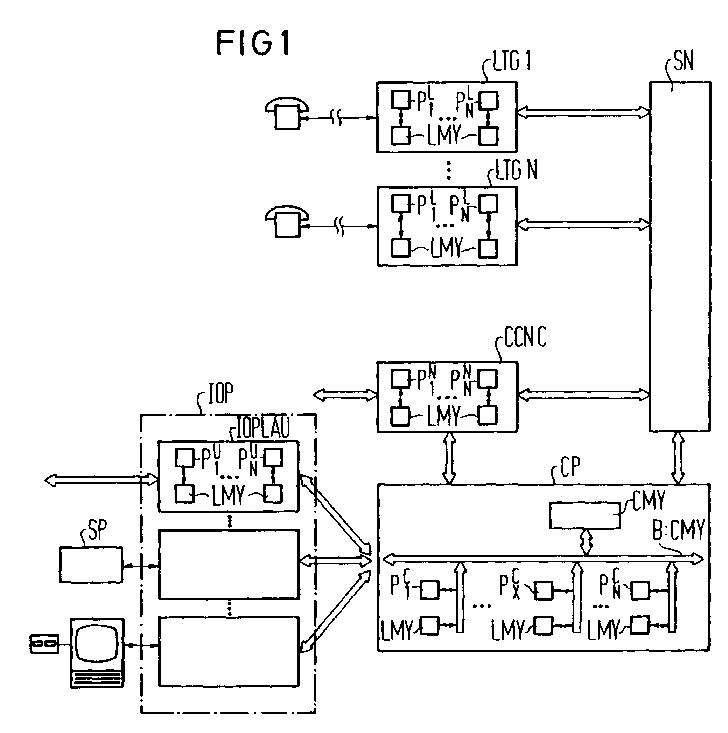

FIG 1 zeigt ein modular strukturiertes Kommunikationssystem. Dieses ist ausgestaltet durch

- ein der Durchschaltung von Verbindungen dienendes Koppelfeld SN
- dem Anschluß von Teilnehmergeräten dienende Anschlußbaugruppen $LTG_1...LTG_n$ mit Prozessoren $P^L_1...P^L_N$ und diesen zugeordneten lokalen Speichersystemen LMY.
- eine der Steuerung des zentralen Zeichenkanals CCNC dienende Anschlußbaugruppe mit Prozessoren $P^N_1...P^N_n$ und diesen zugeordneten lokalen Speichersystemen LMY

- einen Koordinationsprozessor CP, bestehend aus

  -- einem für alle Einheiten des Koordinationsprozessors CP gemeinsamen Speichersystem CMY
  -- einem für alle Einheiten des Koordinationsprozessors CP gemeinsamen zentralen Bussystem B:CMY
  -- mehreren Prozessoren $P_1^C...P_n^C$ mit diesen zugeordneten lokalen Speichersystemen LMY

- sowie weitere Anschlußbaugruppen $IOP_1...IOP_n$, die an den zentralen Systembus B:CMY des Koordinationsprozessors CP angeschlossen sind und über die externe Speichersysteme SP, externe Ein-/Ausgabegeräte PC sowie ein externes Rechenzentrum RZ anschaltbar sind.

Das Einbringen schneller Fehlerkorrekturen ist generell nur dort möglich, wo prozessoren mit ihnen zugeordneten Arbeitsspeichern vorhanden sind. Dies ist im Kommunikationssystem nach FIG 1 in den Anschlußbaugruppen $LTG_1...LTG_n$, der zentralen Zeichenkanalanschlußbaugruppe CCNC, dem Koordinationsprozessor CP sowie in der als Schnittstelle zu einem externen Rechenzentrum fungierenden Anschlußbaugruppe IOPLAU der Fall. Die Patch-Prozeduren sind in den jeweiligen Arbeitsspeichern LMY, sowie dem gemeinsamen Speichersystem CMY des Koordinationsprozessors CP abgelegt. Mittels des Ein-/Ausgabegerätes PC werden die Patch-Prozeduren mit einem speziellen Kommando aufgerufen. Die Kommunikation zwischen Anwender und Patch-Prozeduren erfolgt dabei über die Verwendung symbolischer Kommandos und Namen.

Bei Aufruf des Patch-Kommandos über das externe Ein-/Ausgabegerät PC wird unmittelbar zu dem im Speichersystem CMY residenten Patch-Prozeduren des Koordinationsprozessors CP verzweigt. Diese führen eine Syntaxprüfung der eingegebenen PatchKommandos durch, strukturieren Informationen, welche Codierung in welcher Prozedur geändert werden soll, und reichen, falls erforderlich, die entsprechenden Kommandos an die betreffenden Einheiten weiter. Das Einführen von Patches in fehlerhaft codierte Prozeduren des Kommunikationssystems setzt ein unterbrechungsfreies Einbringen voraus. Patch-Prozeduren sind - wie die meisten Systemprozeduren und vermittlungstechnischen Prozeduren eines Kommunikationssystems - in Prozessen zusammengefaßt. Um komplexe Aufgaben hinsichtlich ihrer Dringlichkeit steuern zu können, hat man diesen Prozessen sogenannte Prioritätsstufen zugeordnet. Dabei können Prozesse, die in einer niedrigen Prioritätsstufe ablaufen, jederzeit von Prozessen mit höherer Priorität unterbrochen werden. Um ein unterbrechungsfreies Einbringen von schnellen Fehlerkorrekturen in die Prozeduren des Kommunikationssystems sicherzustellen, wird dem für den eigentlichen Einfügevorgang verantwortlichen Patch-Prozeß eine möglichst hohe Priorität zugeordnet. Die Prioritätsstufen sind den jeweiligen Prozessen in tabellarischer Form zugewiesen. Ein Prozessor erhält, bevor er einen Prozeß abarbeitet, von diesem einen Belegungswunsch in Form eines Interrupts. Der Patch-Vorgang erfolgt in zwei Schritten, wobei jedem Schritt eine bestimmte Prioritätsstufe zugewiesen ist. Ein den ersten Schritt repräsentierender erster Prozeß besitzt dabei eine niedrige Priorität, während einem weiteren, zweiten Prozeß, der den zweiten Schritt repräsentiert, eine hohe Priorität zugeordnet wird. Die Vorteile dieser Konstellation seien anhand des Ausführungsbeispiels näher erläutert.

Im folgenden sei angenommen, daß ein modulübergreifender logischer Codierungsfehler im lokalen Speichersystem LMY des Prozessors $P_N^N$ der zentralen Zeichenkanalanschlußbaugruppe CCNC zu korrigieren sei. Nach Eingabe des Patch-Kommandos und erfolgter Syntaxprüfung durch die im gemeinsamen Speichersystem CMY des Koordinationsprozessors CP residenten Patch-Prozeduren, verzweigen letztere zu den im lokalen Speichersystem LMY des Prozessors $P_N^N$ residenten Patch-Prozeduren, die für das Einbringen der Code-Änderungen verantwortlich sind. Die Patch-Prozeduren sind organisatorisch in Patch-Prozessen zusammengefaßt.

Jetzt können die fehlerhaften, in mehreren Modulen vorkommenden Codierungen über das Ein-/Ausgabegerät PC, RZ entsprechend geändert werden. Falls notwendig, muß zu dem geänderten Code noch ein, in einem speziellen Speicherbereich zu erstellender 'Rucksack' eingebracht werden. Wesentlich ist jedoch, daß die den Code-Änderungen entsprechenden Informationen zunächst in einem speziellen, von Patch-Prozeduren zu diesem Zweck zur Verfügung gestellten Speicherbereich aufbereitet werden. Der eigentliche, noch zu ändernde Code in dem betreffenden Soft-waremodul bleibt dabei noch unverändert; das Einfügen der eingangs aufbereiteten Code-Änderungen wird erst anschließend durch zwei verschiedene Prioritätsstufen durchlaufende Patch-Prozesse durchgeführt. Diese Vorgehensweise ist bei der Korrektur modul-und prozessorübergreifender Fehler identisch und wird detailliert bei der Behandlung des Einfügeprozesses prozessorübergreifender logischer Codierungsfehler beschrieben. Nach Abschluß aller Einfügeprozesse wird der Prozessor $P_N^N$ wieder freigegeben, und steht damit den system- sowie vermittlungstechnischen Prozeduren wieder zur Verfügung. Damit ist zwar der Prozessor $P_N^N$ für die Dauer des Einfügevorgangs für die systeminternen - sowie vermittlungstechnischen Prozeduren gesperrt; dies bedeutet aber keine Einschränkung, da zum einen unter Umständen andere Prozessoren während dieser Zeit diese Aufgaben übernehmen können, und zum anderen das Einbringen schneller Fehlerkorrekturen vorzugsweise in einer 'verkehrsschwachen' Zeit durchgeführt wird.

Wesentlich für den Patch-Vorgang ist die Tatsache, daß diesen erst dann als erfolgreich abgeschlossen betrachtet werden kann, wenn die Korrekturen in allen Modulen eingeführt worden sind ('Alles - oder - Nichts Regel'). Dies wird durch spezielle, zu diesem Zweck in den Patch-Prozeduren vorgesehene Routinen überprüft. Erst dann erfolgt eine entsprechende Aktualisierung der geänderten Codierung auf dem externen Speichermedium SP.

Zu den eingangs näher definierten, komplexeren logischen Codierungsfehlern gehören aber auch insbesondere sogenannte prozessorübergreifende logische Codierungsfehler. Sie treten in Multiprozessorsystemen auf, wo mehrere Prozessoren unterschiedliche Prozesse bearbeiten, wobei deren Einzelergebnis wieder zu einem Gesamtergebnis zusammengesetzt werden, oder auch in Schnittstellen, die von zwei oder mehreren Prozessoren gebildet werden. Im Ausführungsbeispiel wäre eine solche Schnittstelle beispielsweise die Verbindung zwischen dem Koordinationsprozessor CP und der zentralen Zeichenkanalanschlußbaugruppe CCNC. Das Einführen von Code-Änderungen zur Beseitigung prozessorübergreifender Fehler geschieht auf ähnliche Weise wie bei dem soeben beschriebenen Verfahren zur Beseitigung modulübergreifender Fehler. Auch hier wird nach erfolgter Syntaxprüfung durch die im gemeinsamen Speichersystem CMY des Koordinationsprozessors CP residenten Patch-Prozeduren zu den in den jeweiligen lokalen Speichersystemen LMY residenten Patch-Prozeduren verzweigt, wobei die den Code-Änderungen entsprechenden Informationen in einem speziellen, zu diesem Zweck reservierten Speicherbereich aufbereitet werden. Dabei wird auch hier der im Arbeitsspeicher LMY noch zu ändernde Code bei diesem Schritt nicht verändert. Während dieses Vorgangs können in den betreffenden Softwaremodulen, in denen die Code-Änderungen einzufügen sind, auch weiterhin über die, die Schnittstelle zwischen zentraler Zeichenbaugruppe CCNC und Koordinationsprozessor CP bildenden Prozessoren $P_N^N$ und $P_N^C$ systeminterne wie auch vermittlungstechnische Prozesse ablaufen. In einem ersten Schritt werden nun Patch-Prozesse niedriger Priorität zur Reservierung beider Prozessoren $P_N^N$, $P_N^C$ gestartet. Dabei werden auf den Prozessoren $P_N^N$, $P_N^C$ gerade ablaufende Prozesse höherer Priorität nicht unterbrochen. Erst wenn diese ihre Aufgabe beendet haben, greifen die Patch-Prozesse niedriger Priorität auf die Prozessoren $P_N^N$N, $P_N^C$ zu. Unmittelbar danach werden weiterer, zweite Prozesse hoher Priorität gestartet, die das Einfügen des geänderten Codes sowie eventuell vorhandene "Rucksäcke" durchführen. Aufgrund ihrer hohen Priorität können diese Prozesse aber nicht unterbrochen werden. Da sie in ihrem Ablauf aber von sehr kurzer Dauer ist, bedeutet dies für die für diese Zeit aufgeschobenen vermittlungstechnischen Prozeduren und Prozesse keine Einschränkung. Das Reservieren der Prozessoren $P_N^N$, $P_N^C$ geschieht dabei unabhängig voneinander.

Problematisch hierbei ist jedoch, daß während des Einfügevorgangs einer der Prozessoren ausfallen kann. In diesem Fall fände nur ein teilweises Einbringen der entsprechenden Fehlerkorrekturen statt. Aus diesem Grunde wurde in den Patch-Prozeduren, die bereits eingangs beschriebene "Alles-oder-Nichts-Regel" eingeführt. Dies bedeutet in diesem Fall, daß das System nur dann den Patch akzeptiert, wenn die einzelnen Fehleränderungen auf jedem der Prozessoren $P_N^N$, $P_N^C$ eingeführt worden sind.

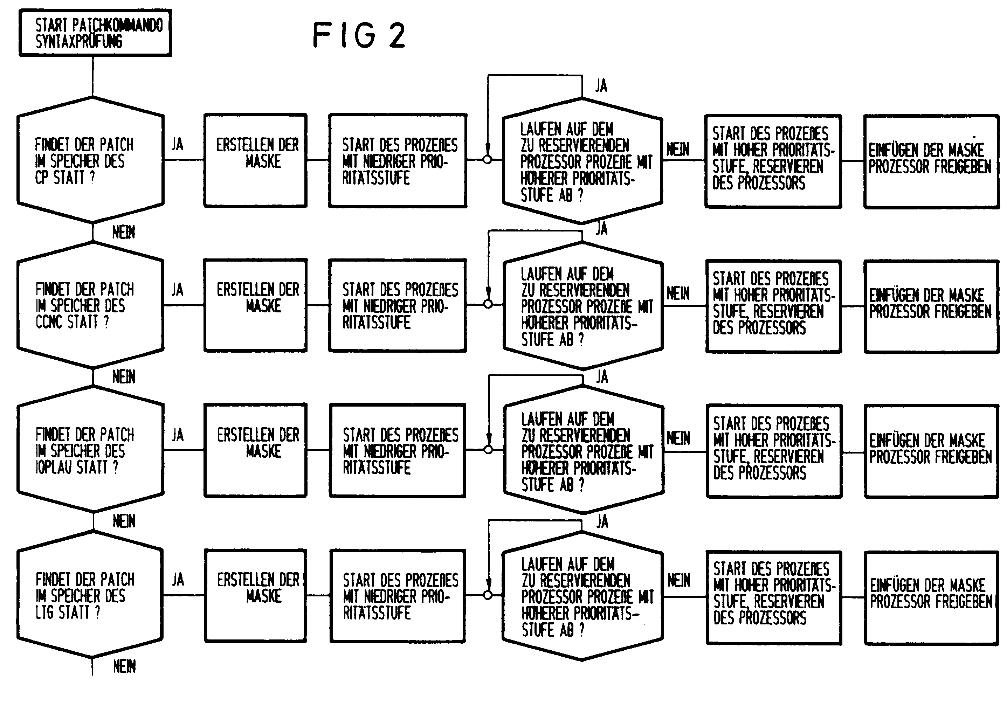

Anschließend werden die Prozessoren $P_N^N$, $P_N^C$ den system- und vermittlungstechnischen Prozeduren wieder freigegeben. Die einzelnen Patchvorgänge sind in Form eines Flußdiagramms in FIG 2 wiedergegeben.

## Patentansprüche

1. Verfahren zum Einbringen von Fehlerkorrekturen in einem Kommunikationssystem, bestehend aus

   - einem der Durchschaltung von Verbindungen dienenden Koppelfeld (SN)
   - Anschlußbaugruppen ($LTG_1...LTG_n$) mit ersten Prozessoren ($P_1^L...P_n^L$) und diesen zugeordneten ersten lokalen Speichersystemen (LMY)
   - einem der zentralen System-Steuerung dienenden Multiprozessorsystem (CP) mit einem zentralen Systembus (B:CMY), zweiten Prozessoren ($P_1^C...P_n^C$) mit diesen zugeordneten zweiten lokalen Speichersystemen (LMY) sowie einem allen Einheiten des Multiprozessorsystems (CP) gemeinsamen Speichersystem (CMY)
   - einer der Steuerung eines zentralen Zeichenkanals dienenden Zeichenkanalanschlußgruppe (CCNC) mit dritten Prozessoren ($P_1^n...P_n^N$) und diesem zugeordneten dritten lokalen Speichersystemen (LMY)
   - weiteren, die Verbindung des Multiprozessorsystems (CP) zu externen Ein-/Ausgabegeräten (PC, RZ) darstellenden Anschlußbaugruppen (IOP) mit vierten Prozessoren ($P_1^U... P_N^U$) und diesen zugeordneten, vierten lokalen Speichersystemen (LMY)
   - sowie mit Patch-Prozeduren zur Korrektur von Software-Fehlern von in der Kommunikationsanlage residenten Prozeduren/Daten, mit folgenden Verfahrensschritten:

     a) Nach dem Aufruf eines aus mehreren Teilkomponenten bestehenden und mit mehreren Zieladressen versehenen Patch-Kommandos mittels wenigstens eines Ein/Ausgabegerätes (PC, RZ) wird nach Auswertung der Zieladressen eine Verzweigung zu den, in den jeweiligen Speichersystemen (LMY) der verschiedenen Anschlußbaugruppen ($LTG_1...LTG_N$,

CCNC, IOP) oder des Multiprozessorsystems (CP) residenten Patch-Prozessen durchgeführt und

b) nach Auswertung der Teilkomponenten werden in einem ersten Schritt den Code-Änderungen entsprechende Informationsdaten als integraler Bestandteil des Patch-Kommandos systemkonform aufbereitet in einem zweiten Schritt reservieren weitere Patch-Prozesse wenigstens einen der Prozessoren $(P_1^L...P_N^L, P_1^C... P_N^C, P_1^N...P_N^N, P_1^U...P_N^U)$ der verschiedenen Anschlußbaugruppen $(LTG_1...LTG_N, CCNC, IOP)$ oder des Multiprozessorsystems (CP) exklusiv, indem ein erster Patch-Prozess mit niedrigerer Prioritätsstufe als die dem Normalbetrieb des Kommunikationssystems zugeordneten Prozesse erst dann auf wenigstens einen der Prozessoren $(P_1^L...P_N^L, P_1^C... P_N^C, P_1^N... P_N^N, P_1^U...P_N^U)$ zugreift, bis alle auf diesen Prozessor ablaufenden Prozesse höherer Prioritätsstufe ihre Aufgabe beendet haben, und indem danach unmittelbar ein zweiter Patch-Prozess mit die Prioritätsstufen der dem Normalbetrieb des Kommunikationssystems zugeordneten Prozesse übersteigender Prioritätsstufe das Einfügen der aufbereiteten Code-Änderungen übernimmt und aufgrund seiner hohen Prioritätsstufe auch nicht von Prozessen niedrigerer Prioritätsstufe unterbrochen werden kann, und

in einem dritten Schritt wird nach Abschluß des Patch der wenigstens eine exklusiv reservierte Prozeß den Prozeduren der Vermittlungstechnik wieder übergeben.

2. Verfahren nach Anspruch 1,
   **dadurch gekennzeichnet**,
   daß der Patch erst dann erfolgreich abgeschlossen wird, wenn alle eine Änderung bildenden Teilkomponenten erfolgreich eingebracht worden sind.

3. Verfahren nach Anspruch 1,
   **dadurch gekennzeichnet**,
   daß die Kommunikation zwischen Anwender und Patch-Prozessoren unter Verwendung von symbolischen Namen für Prozesse, Prozeduren, Module und Adressen erfolgt.

**Claims**

1. Method for introducing error corrections in a communication system, comprising

   - a switching network (SN) serving to switch through connections,
   - interface modules $(LTG_1...LTG_n)$ having first processors $(P_1^L...P_n^L)$ and first local memory systems (LMY) assigned to the said first processors,
   - a multiprocessor system (CP) serving the purpose of central system control and having a central system bus (B:CMY), second processors $(P_1^C...P_n^C)$ having second local memory systems (LMY) assigned to the said second processors, and a memory system (CMY) common to all units of the multiprocessor system (CP),
   - a signal channel interface module (CCNC) serving to control a central signal channel and having third processors $(P_1^n...P_n^N)$ and third local memory systems (LMY) assigned to the said third processors,
   - further interface modules (IOP), representing the connection of the multiprocessor system (CP) to external input/output devices (PC, RZ) and having fourth processors $(P_1^U...P_N^U)$, and fourth local memory systems (LMY) assigned to the said fourth processors,
   - and having patch procedures for correcting software errors in the procedures/data resident in the communications system, comprising the following method steps:

   a) after the call-in of a patch command comprising a plurality of subcomponents and provided with a plurality of destination addresses by means of at least one input/output device (PC, RZ), after evaluation of the destination addresses branching is carried out to the patch processes resident in the respective memory systems (LMY) of the various interface modules $(LTG_1...LTG_N, CCNC, IOP)$ or of the multiprocessor system (CP), and

   b) after evaluation of the subcomponents, information data corresponding to the code changes is conditioned in conformity with the system in a first step as an integral component of the patch command, in a second step further patch processes exclusively reserve at least one of the processors $(P_1^L...P_N^L, P_1^C...P_N^C, P_1^N...P_N^N, P_1^U...P_N^U)$ of the various interface modules $(LTG_1...LTG_N, CCNC, IOP)$ or of the multiprocessor system (CP) in that a first patch process having a lower priority level than the processes assigned to the normal operation of the communication system does not access at least one of the processors $(P_1^L...P_N^L, P_1^C...P_N^C, P_1^N...P_N^N, P_1^U...P_N^U)$ until all the processes of higher priority level running on the said processor have finished their task, and in that immediately afterwards a second patch process having a priority level exceeding the priority levels of the processes assigned to the normal operation of the communication system takes over the insertion of the conditioned code changes and, because of its high priority level, also cannot be interrupted by processes of a lower priority level, and after conclusion of the patch of the at least one exclusively reserved process is handed over again in a third step to the procedures of the switching technology.

2. Method according to Claim 1, characterized in that the patch cannot be successfully concluded until all of the subcomponents forming a change have been successfully introduced.

3. Method according to Claim 1, characterized in that the communication between user and patch processors is performed by using symbolic names for processes, procedures, modules and addresses.

**Revendications**

1. Procédé d'insertion de corrections d'erreurs dans un système de communication, constitué de

- un réseau (SN) de connexion servant à la transmission de communications,
- des modules ($LTG_1$ à $LTG_n$) de raccordement comportant des premiers processeurs ($P_1^L$ à $P_n^L$) et des premiers systèmes (LMY) de mémoire locaux associés à ceux-ci,
- un système (CP) multiprocesseur servant à la commande centrale du système et comportant un bus central (B:CMY) de système, des seconds processeurs ($P_1^C$ à $P_n^C$) ayant des seconds systèmes (LMY) de mémoire locaux associés à ceux-ci ainsi qu'un système (CMY) de mémoire commun à toutes les unités du système (CP) multiprocesseur,
- un module (CCNC) de raccordement au canal de signalisation servant à la commande d'un canal central de signalisation et comportant des troisièmes processeurs ($P_1^n$ à $P_n^N$) et des troisièmes systèmes (LMY) de mémoire locaux associés à ceux-ci,
- d'autres modules (IOP) de raccordement représentant la liaison du système (CP) multiprocesseur à des appareils extérieurs (PC, RZ) d'entrée/sortie et comportant des quatrièmes processeurs ($P_1^U$ à $P_N^U$) et des quatrièmes systèmes (LMY) de mémoire locaux associés à ceux-ci,
- ainsi que des procédures Patch de corrections d'erreurs logicielles de données/procédures résidant dans l'installation de communication, ayant les étapes opératoires suivantes :

a) on effectue, après l'appel d'une instruction Patch constituée de plusieurs composantes partielles et munie de plusieurs adresses de destination, au moyen d'au moins un appareil (PC, RZ) d'entrée/sortie, après exploitation des adresses de destination, une bifurcation vers les processus Patch résidant dans les systèmes (LMY) de mémoire des différents modules ($LTG_1$ à $LTG_N$, CCNC, IOP) de raccordement ou du système (CP) multiprocesseur et
b) on prépare, de manière conforme aux systèmes après exploitation des composantes partielles, au cours d'une première étape, des données d'informations correspondant aux modifications de codes en tant que partie constitutive intégrante de l'instruction Patch,

au cours d'une seconde étape, d'autres processus Patch réservent au moins l'un des processeurs ($P_1^L$ à $P_N^L$, $P_1^C$ à $P_N^C$, $P_1^N$ à $P_N^N$, $P_1^U$ à $P_N^U$) des différents modules de raccordement ($LTG_1$ à $LTG_N$, CCNC et IOP) ou du système multiprocesseur (CP), de manière exclusive, par le fait qu'un premier processus Patch de rang de priorité plus bas que celui des processus associés au fonctionnement normal du système de communication n'accède à au moins l'un des processeurs ($P_1^L$ à $P_N^L$, $P_1^C$ à $P_N^C$, $P_1^N$ à $P_N^N$, $P_1^U$ à $P_N^U$), que jusqu'à ce que tous les processus se déroulant sur ce processeur et de rang de priorité plus grand aient terminé leur tâche, et par le fait qu'immédiatement ensuite un second processus Patch de rang de priorité plus grand que les rangs de priorité des processus associés au fonctionnement normal du système de communication prend en charge l'insertion des modifications de codes préparées et ne peut pas non plus être interrompu par des processus de rang de priorité plus bas du fait de son rang de priorité grand, et au cours d'une troisième étape, on retransmet, après que le Patch est achevé, le au moins un processus réservé de manière exclusive aux procédures du dispositif technique de commutation.

2. Procédé suivant la revendication 1, caractérisé en ce que, on ne met fin avec succès au Patch que lorsque l'on a introduit avec succès toutes les composantes partielles formant une modification.

3. Procédé suivant la revendication 1, caractérisé en ce que

on effectue la communication entre l'utilisateur et les processeurs Patch en utilisant des noms symboliques pour les processus, les procédures, les modules et les adresses.

# FIG 1

FIG 2

START PATCHKOMMANDO SYNTAXPRÜFUNG

FINDET DER PATCH IM SPEICHER DES CP STATT ? — JA → ERSTELLEN DER MASKE → START DES PROZEßES MIT NIEDRIGER PRIORITÄTSSTUFE → LAUFEN AUF DEM ZU RESERVIERENDEN PROZESSOR PROZEßE MIT HÖHERER PRIORITÄTSSTUFE AB ? (JA) — NEIN → START DES PROZEßES MIT HOHER PRIORITÄTSSTUFE, RESERVIEREN DES PROZESSORS → EINFÜGEN DER MASKE PROZESSOR FREIGEBEN
NEIN

FINDET DER PATCH IM SPEICHER DES CCNC STATT ? — JA → ERSTELLEN DER MASKE → START DES PROZEßES MIT NIEDRIGER PRIORITÄTSSTUFE → LAUFEN AUF DEM ZU RESERVIERENDEN PROZESSOR PROZEßE MIT HÖHERER PRIORITÄTSSTUFE AB ? (JA) — NEIN → START DES PROZEßES MIT HOHER PRIORITÄTSSTUFE, RESERVIEREN DES PROZESSORS → EINFÜGEN DER MASKE PROZESSOR FREIGEBEN
NEIN

FINDET DER PATCH IM SPEICHER DES IOPLAU STATT ? — JA → ERSTELLEN DER MASKE → START DES PROZEßES MIT NIEDRIGER PRIORITÄTSSTUFE → LAUFEN AUF DEM ZU RESERVIERENDEN PROZESSOR PROZEßE MIT HÖHERER PRIORITÄTSSTUFE AB ? (JA) — NEIN → START DES PROZEßES MIT HOHER PRIORITÄTSSTUFE, RESERVIEREN DES PROZESSORS → EINFÜGEN DER MASKE PROZESSOR FREIGEBEN
NEIN

FINDET DER PATCH IM SPEICHER DES LTG STATT ? — JA → ERSTELLEN DER MASKE → START DES PROZEßES MIT NIEDRIGER PRIORITÄTSSTUFE → LAUFEN AUF DEM ZU RESERVIERENDEN PROZESSOR PROZEßE MIT HÖHERER PRIORITÄTSSTUFE AB ? (JA) — NEIN → START DES PROZEßES MIT HOHER PRIORITÄTSSTUFE, RESERVIEREN DES PROZESSORS → EINFÜGEN DER MASKE PROZESSOR FREIGEBEN
NEIN

EP 0 492 251 B1

10